# EUROPEAN PATENT SPECIFICATION

(11) **EP 2 905 185 B1**
(45) Date of publication and mention of the grant of the patent: **14.03.2018**
(21) Application number: 14000435.9
(22) Date of filing: 06.02.2014
(51) Int. Cl.: B60R 21/02

(54) **Motor vehicle with an airbag between a wheel and the car body and airbag unit**
Kraftfahrzeug mit einem Airbag zwischen einem Rad und der Fahrzeugkarosserie und Airbageinheit
Véhicule automobile comprenant un airbag entre une roue et la carrosserie et unité d'airbag

(43) Date of publication of application: 12.08.2015
(73) Proprietor: Autoliv Development AB, 447 83 Vårgårda (SE); Audi AG, 85045 Ingolstadt (DE)
(72) Inventor: Klinkert, Carsten, 85122 Hitzhofen (DE); Heller, Carlo, 74177 Bad Friedrichshall (DE); Brands, Stefan, 86551 Aichach (DE); Huber, Joachim, 85414 Kirchdorf (DE); Kreft-Lazarska, Kamila, 85221 Dachau (DE); Schwaiger, Helmut, 85356 Freising (DE)
(74) Representative: Schön, Thilo

(56) References cited:
- EP-B1- 0 757 634
- WO-A1-2012/108694
- DE-A1- 10 154 026
- DE-A1-102012 005 790
- FR-A1- 2 825 052

## Description

The invention concerns a motor vehicle according to claim 1. The use of airbag units is widespread in today's automotive technology. An airbag unit always comprises at least one airbag enclosing at least one chamber and at least one inflator - in most cases in form of a gas generator - for inflating this at least one chamber.
Currently most airbag units are used for protecting an occupant (driver or passengers) sitting inside the passenger compartment of a motor vehicle. This means that the airbag of such an airbag unit deploys into the passenger compartment in order to restrain the occupant. Consequently the airbag of such an airbag unit must be relatively soft and the airbag usually has to comprise a ventilation, such that kinetic energy can be dissipated.
Recently so called pedestrian airbags have been introduced serving for the protection of a pedestrian involved in an accident. Such pedestrian airbags usually cover at least a part of the windshield or a part of at least one A-pillar in order to prevent the pedestrian's head from hitting the windscreen / an A-pillar. Such pedestrian airbags usually also need to be relatively soft in order to give the desired protection.

From EP 0 757 634 B1 it is known to place the airbag of an airbag unit between a wheel and the car body in order to prevent the wheel from intruding into the passenger compartment. This can especially be useful for small and lightweight motor vehicles.

It is an object of the invention to provide an improved motor vehicle, especially for a use as described in EP 0 757 634 B1.

A motor vehicle comprising such an airbag unit is defined in claim 1. An airbag that is used to prevent a wheel from intruding into a passenger compartment needs to possess several characteristics: First, it needs to be very sturdy, since high forces can be applied to it during the accident and because the airbag needs to be filled with a high pressure (for example 10 bars) in order to prevent the wheel from intruding into the passenger compartment. "Classic" airbags as described above are very likely to burst under such conditions. Second, the airbag should not have a ventilation.

In order to comply with these requirements, the airbag is made of a hose extending from a first end to a second end, wherein this hose comprises a one-pieced woven hose element. This one-pieced woven hose element can be of the type as is used for fire hoses. Due to the one-piece woven structure such a hose element can withstand very high forces.
In most applications the airbag will be located inside a wheel housing, but the invention can also be applied to motor vehicles that does not have a wheel housing, which can be the case especially by ultra-light electric cars.

In order to further improve the robustness it is preferred keep the lateral area of the hose free of holes or the like. But of course, gas needs to be fed into the chamber enclosed by the hose. So, the inflator or a tube being connected to the inflator extends through a face-side opening of the hose.

Often, a relatively large thickness will be desired. In order to provide such a large thickness, it would in principal be possible to use a hose with a large diameter, but this would have several drawbacks. One of those is that a doubling of the thickness (this means the doubling of the diameter of the hose) would lead to quadru-plication of the volume to be filled by the inflator. So, according to the invention the hose is folded such that it is divided into two sections extending parallel to each other. In order to retain the gas-tightness and robustness a separate gas feeding is provided for each chamber.

Of course the face-side openings of the hose must be closed. In order to withstand the high forces it is preferred to provide a clamp or a sleeve block being provided at least at one end area next to one of the ends of the hose taking at least a part of the load when the airbag deploys. Additionally a closing seam can be provided, but especially when a clamp is used, a closing seam might not be necessary. An inflator or tube can extend through such a clamp or such a sleeve block.

A joint clamp or sleeve block can be provided for the two end areas of the house The two inflators or the two tubes for filling the chambers can extend through this clamp or the sleeve block, leading to a very compact design with a minimum of parts.

The airbag unit with a bent or folded tube forming a two-chambered airbag can also be used for other applications, especially outside the passenger compartment. For example it could be placed between the motor block and the passenger compartment in order to prevent the motor block from intruding into the passenger compartment.

In order to enhance the gas-tightness the one-pieced woven hose element can be coated - preferably on its inside - for example with silicone.

The invention will now be described in detail in view of preferred embodiments with reference to the figures. The figures show:

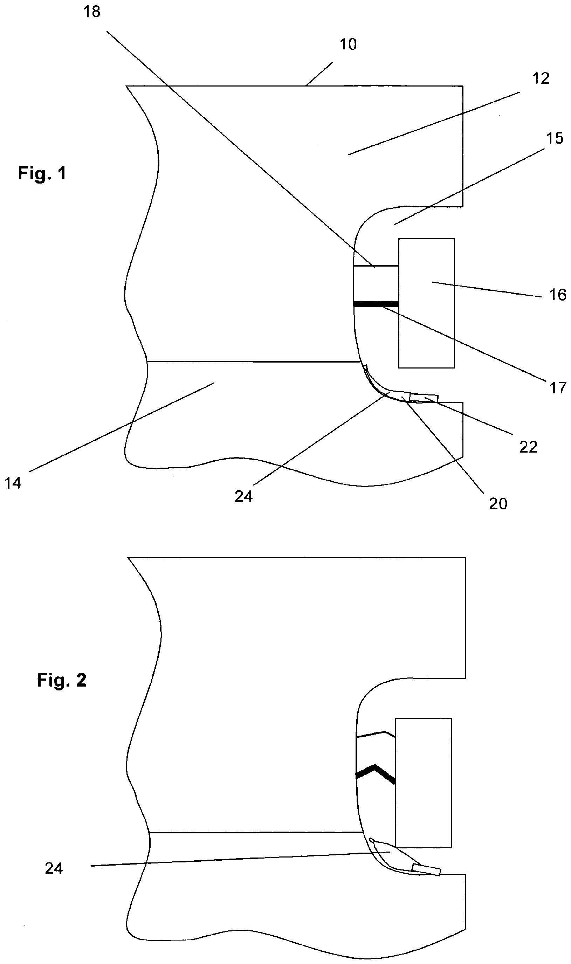

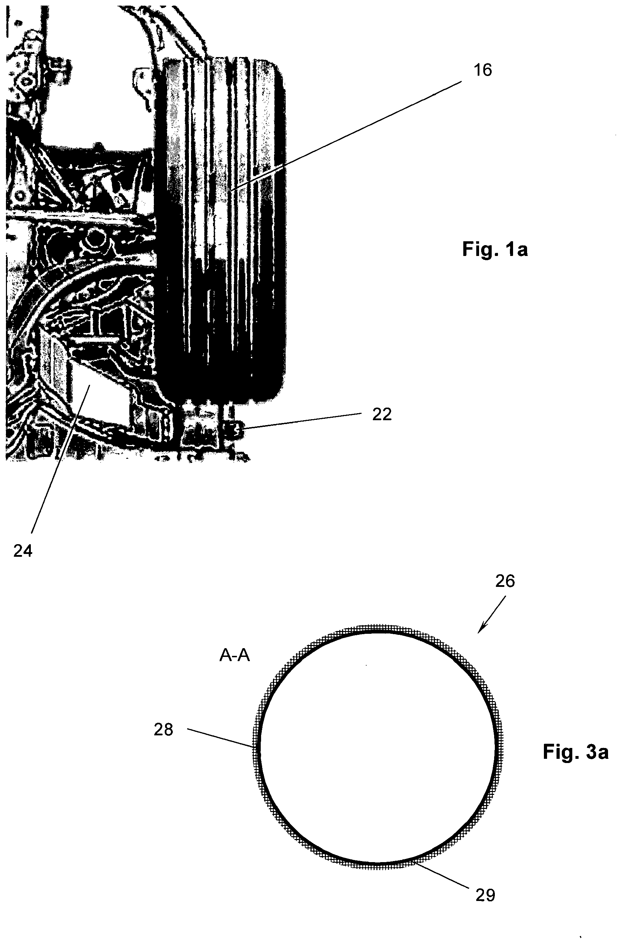

- Figure 1:: a schematic representation of a front part of a motor vehicle, especially of a small passenger car,
- Figure 1 a:: basically what is shown in Figure 1 in a more detailed representation,
- Figure 2:: what is shown in Figure 1 after a side collision,
- Figure 3:: all parts of a first embodiment of an airbag unit used in the motor vehicle shown in Figure 1,
- Figure 3a:: a sectional view of the airbag of Figure 3 along plane A-A,
- Figure 4:: the airbag unit of Figure 3 in its assembled state,
- Figure 4a:: a sectional view along plane B-B of Figure 4,
- Figure 5:: the elements of a second (and preferred) embodiment of the airbag unit in its unassembled state,
- Figure 6:: the airbag unit of Figure 5 in its assembled state,
- Figure 6a:: a sectional view long plane C-C of Figure 6, and
- Figure 7:: a sleeve block.

Figure 1 shows the right front of a motor vehicle, especially a small passenger car in a strongly schematic representation. The car body 10 encloses a motor compartment 12 and a passenger compartment 14. A wheel housing 15 is adjacent to both, the motor compartment 12 and the passenger compartment 14. A wheel 16 is located inside the wheel housing 15 with an axle 17 and a steering linkage 18 extending from the wheel 16.

In order to prevent the wheel 16 from intruding into the passenger compartment 14 in case of a front or a side collision, an airbag unit 20 is provided with the airbag 24 of this airbag unit 20 being placed between the wheel 16 and the passenger compartment 14.

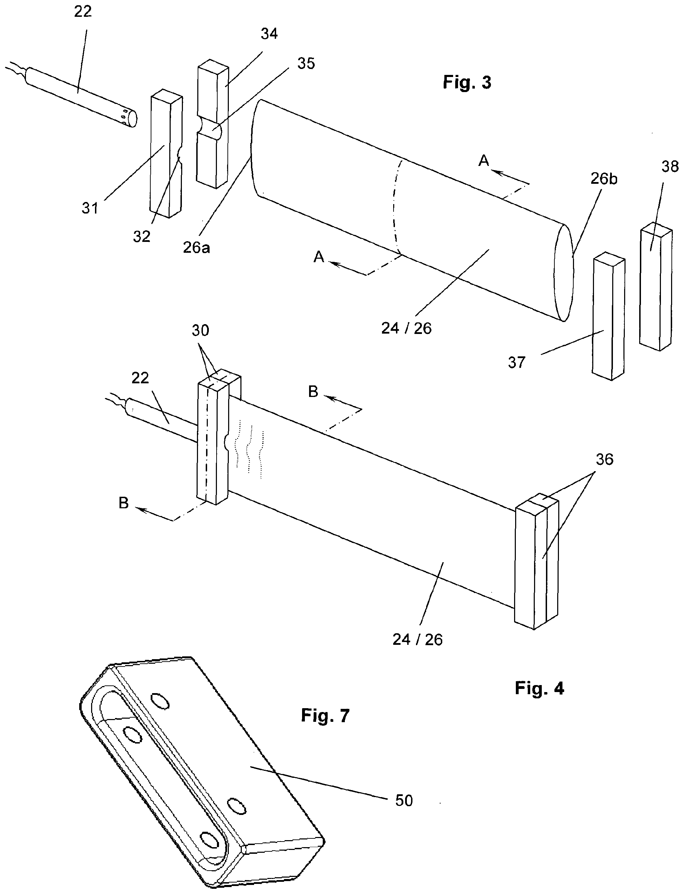

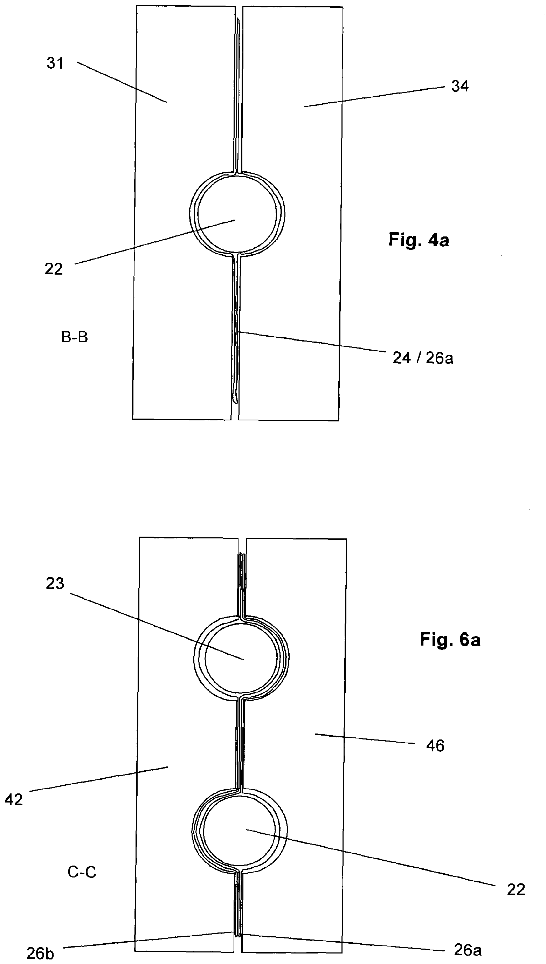

If a critical accident occurs, the gas generator 22 is triggered and fills the chamber of the airbag 24 with gas, such that this airbag 24 protects the passenger compartment 14, as is schematically shown in figure 2. As has already been mentioned, this basic concept is known from generic EP 0 757 634 B1, but this concept can only work successfully, if an airbag unit is provided whose airbag is very sturdy and that can be filled with gas of high pressure, for example ten bars or more. A first embodiment of a suitable airbag unit is now described with reference to Figures 3, 3a, 4 and 4a. This airbag unit is basically comprised of only four elements, namely an airbag 24 in form of a hose 26 extending from a first end 26a to a second end 26b, a first clamp 30 being comprised of a first element 31 and the second element 34, a second clamp 36 being comprised of a first element 37 and a second element 38 and a gas generator 22 serving as inflator.

The hose 26 comprises a hose element 28 which is one-pieced woven, as it is for example known from fire hoses. As is shown in Figure 3a the one-pieced woven hose element 28 can be coated by a coating 29, especially on the inside in order to improve the gas tightness. The hose element extends over the complete length of the hose.

A characteristic feature of a hose is that its face ends are initially open. Of course these two openings need to be closed in order to make an airbag 26 out of this hose 24. It turned out that closing the face end openings only by seams is most likely not sturdy enough for the described application. So, in the first embodiment the two face end openings are closed by the aforementioned clamps, namely the first clamp 30 and the second clamp 36, which can be made of metal or plastic, especially fibre-reinforced plastic. In the embodiment shown both clamps consists of separate elements which can be connected by screws or similar elements, but it would also be possible that the two elements of a clamp are connected to one another for example by a hinge. The two elements 37, 38 of a second clamp 36 have flat contact surfaces such that they seal the opening of the second end 26b of the hose 26 tightly.

The contact surfaces of the two elements 31, 34 of the first clamp 30 both show a groove 32, 35 having a semi-circular cross-section, such that the cylindrical gas generator 22 can pass through an opening with circular cross-section formed by the two grooves 32, 35 when the first clamp 30 is closed. (please see especially Figure 4a). The mounting process is as follows: First, the gas generator 22 is inserted into the chamber enclosed by the hose 26 and then the first clamp 30 is applied such that the gas generator 22 is gas-tightly connected to an end area of the airbag 24 formed by the hose 26. If it is not desired to insert the gas generator 22 itself into the chamber of the airbag it would also be possible to connect the gas generator 22 via a tube with the chamber of the airbag in a similar way, namely such that the first clamp 30 forms an opening through which the tube extends. The described connection of the gas generator with the chamber (directly or via a tube) is strongly preferred since by this it is not necessary to penetrate through the lateral surface of a hose which might lead to a local weakening of the hose.

Especially the second clamp 36 could be replaced by a one-piece sleeve block 50 as shown in figure 7, such that the sleeve block takes at least a part of the load when the airbag expands. In this case the face end opening usually must be additionally closed by a seam in order to achieve gas tightness.

When the described airbag module is mounted, it is preferred that the first clamp and/or the gas generator are permanently (often also rigidly) connected to the car body. In many applications it will also be necessary to connect the second clamp with the car body, but, since the airbag (the hose) will shorten when filled with gas, it is preferred that the connection of the second clamp with the car body is such that it can be deformed or destroyed when the airbag deploys. For example, this connection can comprise a breakable plastic part.

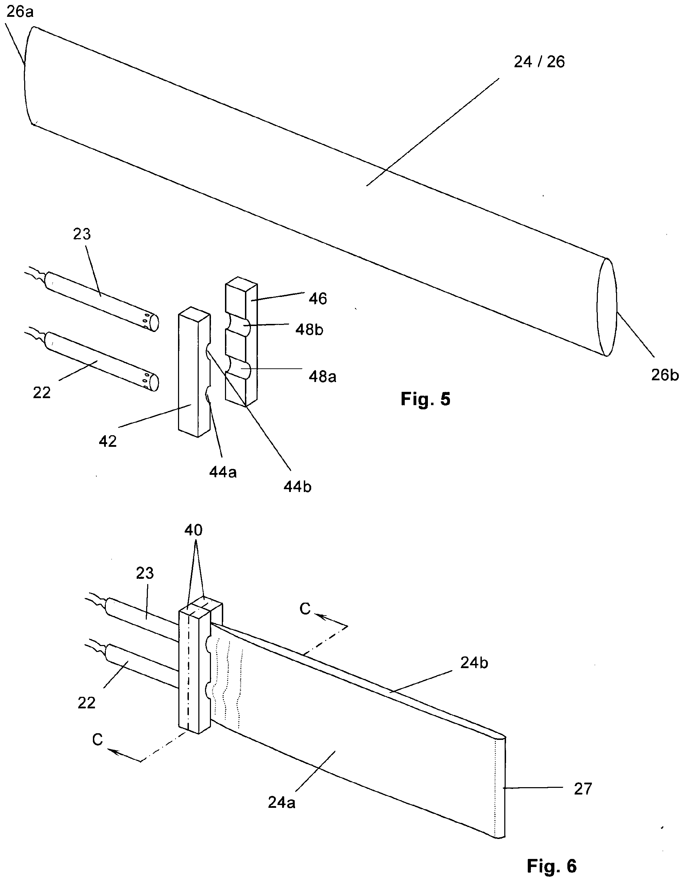

With reference to Figures 5, 6 and 6a a second and currently preferred embodiment of the airbag unit is described. As can be seen from Figure 5, the airbag of this embodiment is also made of a hose 26 which also comprises a one-pieced woven hose element extending over the entire length of the hose and which can also be coated (especially on the inside). In contrast to a first embodiment only one clamp is provided, namely the joint clamp 40 having a first element 42 and a second element 46. Again, the two elements can be separate elements in the unassembled state or they can be connected to one another, for example by a hinge. Further, two gas generators 22, 23 are provided and the two elements 42, 46 of the joint clamp both show two grooves 44a, 44b, 48a, 48b, one for each gas generator 22, 23.

The assembly process is as follows: First, the hose 24 is folded or bent in the middle between the two ends 26a, 26b of the hose, such that the two end 26a, 26b of the hose are placed next to each other. Then, the first gas generator is inserted through the first end of the hose and the second gas generator is inserted through the second end of the hose (or vice versa). Finally, the joint clamp is applied the end areas of the hose. So, a two-chambered airbag is created by very simple means.

This second embodiment has several advantages: First, the thickness of the deployed airbag is doubled. Second, only one clamp is needed. And finally, the end of the airbag remote from the joint clamp can be free of any heavy parts such as a clamp or a sleeve block. This makes the mounting easier and it prevented that such a heavy part hits other parts of the vehicle when the airbag deploys.

Of course it is possible that to each wheel of the motor vehicle, especially to each front wheel, an airbag unit as described herein is allocated.

### List of reference numbers

- 10: car body
- 12: motor compartment
- 14: passenger compartment
- 15: wheel housing
- 16: wheel
- 17: axle
- 18: steering linkage
- 20: airbag unit
- 22, 23: gas generator
- 24: airbag
- 24a: first section
- 24b: second section
- 26: hose
- 26a: first end
- 26b: second end
- 27: bent
- 28: hose element
- 29: coating
- 30: first clamp
- 31: first element of the first clamp
- 32: groove
- 34: second element of the first clamp
- 35: groove
- 36: second clamp
- 37: first element of second clamp
- 38: second element of second clamp
- 40: joint clamp
- 42: first element of the joint clamp
- 44a, 44b: groove
- 46: second element of the joint clamp
- 48a, 48b: groove
- 50: sleeve block

## Claims

1. " A motor vehicle comprising a passenger compartment (14) inside a car body (10), a plurality of wheels (16) outside the passenger compartment (14), and an airbag unit (20) comprising at least one airbag (24) enclosing at least one chamber and at least one inflater for inflating at least one chamber, wherein said at least one airbag (24) is located between a wheel (16) and said car body (10) or between the motor block and the passenger compartment wherein said airbag (24) is made of a hose (26) extending from a first end (26a) to a second end (26b), said hose (26) comprising a one-pieced woven hose element (28), wherein the tube is bent or folded, such that two parallel sections (24a, 24b) of the airbag (24) are formed, with each section (24a, 24b) enclosing a chamber, and a separate gas-feeding path is provided for each chamber, wherein an inflater or a tube being connected to an inflater extends through each face side opening of the hose (26)".

2. Motor vehicle according to claim 1, **characterised in that** the two end areas of the hose (26) are held by a joint clamp (40) or a joint sleeve block.

3. Motor vehicle according to claim 2, **characterised in that** the two inflators or the two tubes extend through the joint clamp (40) or the sleeve block.

4. Motor vehicle according to one of the preceding claims, **characterised in that** a separate inflator is provided for each chamber.

5. Motor vehicle according to one of the preceding claims, **characterised in that** the one-pieced woven hose element (28) is coated, preferably on its inside.

## Patentansprüche

1. Kraftfahrzeug mit einem Insassenraum (14) innerhalb einer Karosserie (10), einer Mehrzahl von Rädern (16) außerhalb des Insassenraums (14) und einer Gassackeinheit (20), welche wenigstens einen wenigstens eine Kammer umschließenden Gassack (24) und wenigstens einen Inflator zum Aufblasen wenigstens einer Kammer aufweist, wobei der wenigstens eine Gassack (24) zwischen einem Rad (16) und der Karosserie (10) oder zwischen dem Motorblock und dem Insassenraum angeordnet ist, wobei der Gassack (24) aus einem sich von einem ersten Ende (26a) zu einem zweiten Ende (26b) erstreckenden Schlauch (26) hergestellt ist, welcher ein einstückig gewobenes Schlauchelement (28) aufweist, wobei der Schlauch gefaltet oder gebogen ist, so dass zwei parallele Abschnitte (24a, 24b) des Gassack (24) gebildet sind, wobei jeder Abschnitt (24a, 24b) eine Kammer umschließt, und wobei für jede Kammer ein separater Gaszuführweg vorgesehen ist, wobei sich durch jede Stirnseitenöffnung des Schlauches (26) ein Inflator oder ein mit einem Inflator verbundenes Rohr erstreckt.

2. Kraftfahrzeug nach Anspruch 1, **dadurch gekennzeichnet, dass** die zwei Endbereiche des Schlauches (26) durch eine gemeinsame Klemme (40) oder einen gemeinsamen Schlauchblock gehalten sind.

3. Kraftfahrzeug nach Anspruch 2, **dadurch gekennzeichnet, dass** sich zwei Inflatoren oder zwei Rohre durch die gemeinsame Klemme (40) oder den Schlauchblock erstrecken.

4. Kraftfahrzeug nach einem der vorangehenden Ansprüche, **dadurch gekennzeichnet, dass** für jede Kammer ein separater Inflator vorgesehen ist.

5. Kraftfahrzeug nach einem der vorangehenden Ansprüche, **dadurch gekennzeichnet**, das das einstückig gewobene Schlauchelement (28) beschichtet ist, vorzugsweise auf seiner Innenseite.

## Revendications

1. Véhicule à moteur comprenant un compartiment de passager (14) à l'intérieur d'un corps de voiture (10), une pluralité de roues (16) à l'extérieur du compartiment de passager (14), et une unité d'airbag (20) comprenant au moins un airbag (24) renfermant au moins une chambre et au moins un gonfleur pour gonfler au moins une chambre, dans lequel ledit au moins un airbag (24) est situé entre une roue (16) et ledit corps de voiture (10) ou entre le bloc-moteur et le compartiment de passager dans lequel ledit airbag (24) est composé d'un tuyau (26) s'étendant depuis une première extrémité (26a) à une seconde extrémité (26b), ledit tuyau (26) comprenant un élément de tuyau tissé en une pièce (28), dans lequel le tube est coudé ou plié, de sorte que deux sections parallèles (24a, 24b) de l'airbag (24) soient formées, chaque section (24a, 24b) renfermant une chambre, et une voie d'alimentation en gaz séparée est prévue pour chaque chambre, dans lequel un gonfleur ou un tube qui est relié à un gonfleur s'étend au travers de chaque ouverture de face latérale du tuyau (26).

2. Véhicule à moteur selon la revendication 1, **caractérisé en ce que** les deux zones d'extrémité du tuyau (26) sont maintenues par une pince de joint (40) ou un bloc de manchon de joint.

3. Véhicule à moteur selon la revendication 2, **caractérisé en ce que** les deux gonfleurs ou les deux tubes s'étendent au travers de la pince de joint (40) ou du bloc de manchon.

4. Véhicule à moteur selon l'une quelconque des revendications précédentes, **caractérisé en ce qu'**un gonfleur séparé est prévu pour chaque chambre.

5. Véhicule à moteur selon l'une quelconque des revendications précédentes, **caractérisé en ce que** l'élément de tuyau tissé en une pièce (28) est revêtu, de préférence sur son côté intérieur.
